(19) Europäisches Patentamt
European Patent Office
Office européen des brevets

(11) EP 0 959 458 B1

(12) **EUROPEAN PATENT SPECIFICATION**

(45) Date of publication and mention of the grant of the patent:
**13.11.2002 Bulletin 2002/46**

(51) Int Cl.[7]: **G11B 5/54**

(21) Application number: **99116231.4**

(22) Date of filing: **16.12.1993**

# (54) Disk device

Plattenlaufwerk

Unité de disques

(84) Designated Contracting States:
**DE GB**

(43) Date of publication of application:
**24.11.1999 Bulletin 1999/47**

(62) Document number(s) of the earlier application(s) in accordance with Art. 76 EPC:
**93120322.8 / 0 658 882**

(73) Proprietor: **SONY CORPORATION**
**Tokyo (JP)**

(72) Inventors:
- **Kubo, Takeshi**
  **Shinagawa-ku, Tokyo (JP)**
- **Enomoto, Kenji**
  **Shinagawa-ku, Tokyo (JP)**

(74) Representative: **Körber, Wolfhart, Dr. et al**
**Patent- und Rechtsanwälte Mitscherlich & Partner,**
**Sonnenstrasse 33**
**80331 München (DE)**

(56) References cited:
**EP-A- 0 089 277**
**EP-A- 0 264 775**
**WO-A-92/11630**
**GB-A- 2 237 920**

- **PATENT ABSTRACTS OF JAPAN vol. 014, no. 508 (P-1128), 7 November 1990 (1990-11-07) & JP 02 210677 A (HITACHI LTD), 22 August 1990 (1990-08-22)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 959 458 B1

Printed by Jouve, 75001 PARIS (FR)

## Description

## BACKGROUND OF THE INVENTION

### FIELD OF THE INVENTION

The present invention relates to a disk device for moving an arm which supports a head and for positioning the head in a desired position.

### DESCRIPTION OF THE PRIOR ART

Now, a CSS (Contact Start Stop) system is applied to a generally used magnetic hard disk device. In this system, when a magnetic hard disk is stopped, a magnetic head is in contact with a disk surface, and the magnetic head is lifted in accordance with the rotation of the disk.

USP 4,933,785 discloses an N-CSS (Non-Contact Start Stop) type magnetic hard disk device. In the device, a cam follower member is provided inside a head slider on a surface, on a disk side, of a head support suspension of a rotary actuator assembly (i.e., on an actuator coil side), and a cam surface assembly is provided in the vicinity of an outer peripheral portion of the disk. During the unloading, the rotary actuator assembly is moved outside the disk and the cam follower member is brought into contact with the cam surface. Thereafter, the rotary actuator assembly is moved along the cam surface and is held stationary in a lock position.

Also, USP 5,027,241 discloses an N-CSS type magnetic hard disk device. In this device, a cylindrical loading tab is provided at a tip end of a head supporting suspension of a rotary actuator assembly, and a loading slant structure is provided in the vicinity of an outer peripheral portion of the disk. During the unloading, the rotary actuator assembly is moved to outside of the loading slant structure and the loading tab is brought into contact with the slanted surface of the loading slant structure. Thereafter, the rotary actuator assembly is moved along the slant surface and is held stationary in a parking region.

The Japanese Mechanical Association (No. 900-52) Lecture Paper (1990, August 23 and 24, Tokyo, Mechatronics), 204, entitled "The Load/Unload Dynamics for In-line Type Flying Head Systems in Magnetic Disk Storage" shows measurement examples relating to the contact/non-contact in an N-CSS system. In the measurement examples, however, the load/unload operation of the slider is carried out by an arm which carries a suspension. This system is different from that of the present invention. Also, the paper shows the measurement examples in which it was measured whether or not the slider was brought into contact with the disk surface at a loading speed of 80mm/s and 40mm/s and at an unloading speed of 5mm/s. However, the paper is silent with respect to the preferable numerical range. With respect to the posture of the slider, the paper describes that it is preferable for the non-contact loading to adapt the case where the pitch angle is zero or positive, but does not disclose a specific measure at all as to how the positive pitch angle is attained.

In the conventional CSS magnetic hard disc device, liquid contained with the device would adhere to the disc surface so that a attraction phenomenon (stick). In order to avoid this, a texture which roughens the disc surface is formed, but this is opposite to the basic demand that the magnetic head should be close to the magnetic film of the disc as much as possible and is also contradictory to the future demand that the recording should be carried out at the higher and higher density.

Also, in the N-CSS system disclosed in the above-described USP 4,933,785, the cam follower member is provided inside the head slider, and therefore, during the unloading, a large force is necessary to lift up the head slider.

Also, if the cylindrical loading tab is used as shown in the above-described USP 5,027,241, the sliding area with the loading slant structure is increased. As a result, contamination due to the wear powder or the like would occur. Also, the loading tab is made cylindrical, it is necessary to enhance the positional precision of the loading slant structure.

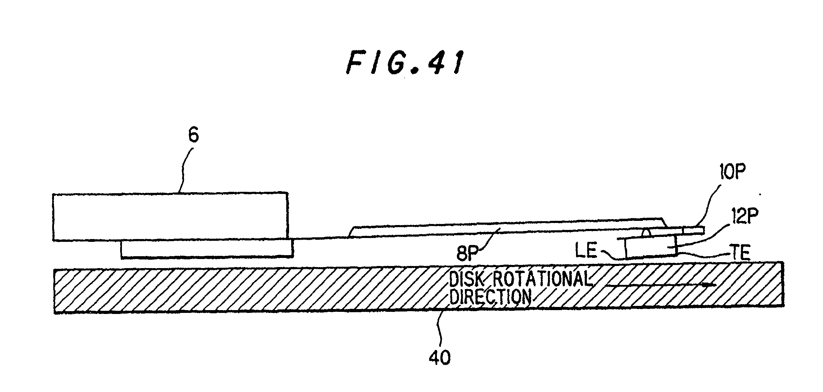

Also, in the loading and unloading of the conventional N-CSS type magnetic hard disk drive, as shown in Fig. 41, a leading end LE of a head slider 12P mounted through a flexure 10P on a suspension 8P is provided closer to the disk 40 than a trailing end TE. Accordingly, it takes such an angle/posture that the leading end LE is projected toward the disk surface earlier than the trailing end TE. Namely, since the leading end LE of the head slider 12P is closer to the disk 40 than the trailing end TE, a dynamic pressure would hardly occur between the disc 40 and the head slider 12P, and the disk 40 would be likely to contact (collide) with the head slider 12P.

EP 0 264 775 discloses a disk device comprising at least one air bearing slider mounting a transducing head for reading data from a disk, a relatively rigid head supporting arm, a resilient suspension attaching the slider to the arm and being biased towards the disk to load the slider thereon and a head load/unload mechanism including a rigid elongated actuating member mounted on the support arm for longitudinal movement and a drive means for driving the actuating member to load and unload the head, the suspension and actuating member including complementary features which engage upon movement of the member in a first direction to unload the slider by flexing the suspension against its bias and which disengage upon movement of the member in the opposite direction to permit the suspension to flex with its bias thereby to load the slider towards the disk.

## SUMMARY OF THE INVENTION

In view of the foregoing difficulties, the object of the invention is to provide a disk device in which a fear that a head slider would be brought into contact with a disk may be suppressed.

The invention is defined in independent claim 1. Further developments are set forth in dependent claim 2.

According to the disk device, an angle is applied to the head slider mount surface of the flexure, the distance of the leading end of the head slider to the disk is always longer than the distance of the trailing end of the head slider thereto in the loading and unloading operation. Accordingly, the dynamic pressure due to the aerial film between the slider and the disk surface is likely to occur, and hence the lifting force occurs even if the slider is located at a relatively high level, it is possible to loading and unloading without any contact between the slider and the disk.

## BRIEF DESCRIPTION OF THE DRAWINGS

In the accompanying drawings:

Fig. 1 is a perspective view showing a structure according to a first embodiment of the invention which is applied to a magnetic hard disk drive;
Fig. 2 is a plan view showing one example of a structure of a rotary actuator assembly used in the embodiment shown in Fig. 1;
Fig. 3 is a side elevational view showing one example of a structure of the rotary actuator assembly used in the embodiment shown in Fig. 1;
Fig. 4 is an enlarged side elevational view showing a projection carrying plate of the rotary actuator assembly shown in Fig. 3;
Fig. 5 is an enlarged plan view showing the projection carrying plate of the rotary actuator assembly shown in Fig. 3;
Figs. 6A to 6F are side elevational views showing a series of operational states in the loading action in the embodiment shown in Fig. 1;
Figs. 7A to 7F are side elevational views showing a series of operational states in the unloading action in the embodiment shown in Fig. 1;
Fig. 8 is a side elevational view showing one example of a structure of a suspension, a flexure and a slider of the embodiment shown in Fig. 1;
Fig. 9 is a bottom view showing the example of the structure of the suspension, flexure and slider of the embodiment shown in Fig. 1;
Figs. 10A, 10B and 10C are a side elevational view, a plan view and a frontal view showing a detailed structure of the flexure shown in Fig. 8;
Figs. 11A, 11B and 11C are a side elevational view, a plan view and a frontal view showing a detailed structure of a conventional flexure;
Fig. 12 is a bottom view showing an angular relationship among the suspension, flexure and slider in the embodiment shown in Fig. 1;
Fig. 13 is a side elevational view showing a relationship between a leading end and a trailing end of the slider and the disk surface in the loading and unloading operation in the embodiment shown in Fig. 1;
Fig. 14 is a graph showing a change in output of an AE sensor fixed to a suspension when an angle between a slider mount surface of a flexure and the suspension, i.e., a slider mount pitch angle θp was changed;
Fig. 15 is a block diagram showing an example of an arrangement of a control system according to the embodiment shown in Fig. 1;
Fig. 16 is a graph showing an example of a disk rpm in the loading and unloading in the embodiment shown in Fig. 1;
Fig. 17 is a graph showing an example of an output of an AE sensor fixed to a suspension when an rpm of the disk was not lower than a flying minimum speed of a head slider but lower than a constant rpm and the loading action was carried out;
Fig. 18 is a graph showing an example of an output of the AE sensor fixed to the suspension when the rpm of the disk was not lower than the flying minimum speed of the head slider but lower than the constant rpm and the unloading action was carried out;
Fig. 19 is a graph showing an example of an output of an AE sensor fixed to a suspension when an rpm of the disk was kept at the normal constant rpm and the loading action was carried out;
Fig. 20 is a graph showing an example of an output of the AE sensor fixed to the suspension when the rpm of the disk was kept at the normal constant rpm and the unloading action was carried out;
Fig. 21 is a graph showing an example of an output of an AE sensor fixed to a suspension in a first conventional article when an rpm of the disk was kept at the normal constant rpm and the loading action was carried out;
Fig. 22 is a graph showing an example of an output of the AE sensor fixed to the suspension in the first conventional article when the rpm of the disk was kept at the normal constant rpm and the unloading action was carried out;
Fig. 23 is a graph showing an example of an output of an AE sensor fixed to a suspension in a second conventional article when an rpm of the disk was kept at the normal constant rpm and the loading action was carried out;
Fig. 24 is a graph showing an example of an output of the AE sensor fixed to the suspension in the second conventional article when the rpm of the disk was kept at the normal constant rpm and the unloading action was carried out;

Figs. 25A to 25E are graphs showing examples of an output of an AE sensor fixed to a suspension when the head loading speed in the direction perpendicular to the disk surface was changed while kept the head pitch angle at +0.135°;
Figs. 26A to 26E are graphs showing examples of an output of an AE sensor fixed to a suspension when the head loading speed in the direction perpendicular to the disk surface was changed while kept the head pitch angle at +0.235°;
Fig. 27 is a graph showing a preferable range for the head loading speed in the direction perpendicular to the disk surface;
Fig. 28 is a graph showing a preferable range for the head unloading speed in the direction perpendicular to the disk surface;
Fig. 29 is a bottom view showing a structure of a suspension, a flexure and a slider in accordance with a second embodiment of the invention which is applied to a magnetic disk drive;
Fig. 30 is a side elevational view showing the structure of the suspension, the flexure and the slider in accordance with the second embodiment of the invention which is applied to the magnetic disk drive;
Fig. 31 is a longitudinal section view showing the suspension, flexure and slider shown in Figs. 29 and 30;
Fig. 32 is a fragmentary longitudinal sectional view showing a detail of the flexure shown in Fig. 31;
Fig. 33 is a cross-sectional view taken along the line B-B of Fig. 29;
Fig. 34 is a bottom view showing a structure of a suspension and a flexure in accordance with a third embodiment of the invention which is applied to a magnetic disk drive;
Fig. 35 is a side elevational view showing the structure of the suspension and the flexure in accordance with the third embodiment of the invention which is applied to the magnetic disk drive;
Fig. 36 is a cross-sectional view taken along the line F-F of Fig. 34;
Fig. 37 is a bottom view showing a detail of the flexure shown in Fig. 34;
Fig. 38 is a longitudinal view taken along the line G-G of Fig. 37;
Fig. 39 is a longitudinal view showing a state of the suspension, flexure and slider in unloading in the third embodiment of the invention;
Fig. 40 is a longitudinal view showing a state of the suspension, flexure and slider in loading in the third embodiment of the invention; and
Fig. 41 is a side elevational view showing a relationship between a leading end and a trailing end of a slider and the disk surface in loading and unloading according to the prior art.

## DESCRIPTION OF THE PREFERRED EMBODIMENTS

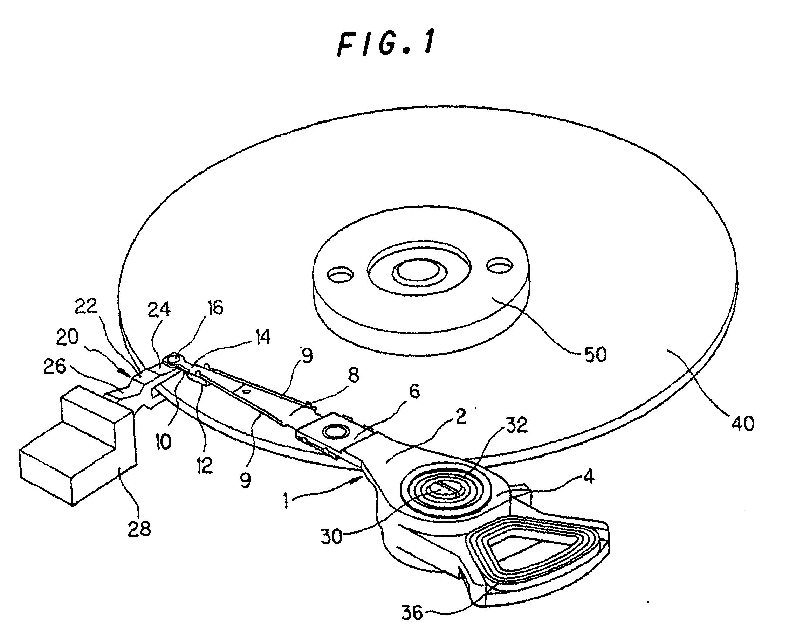

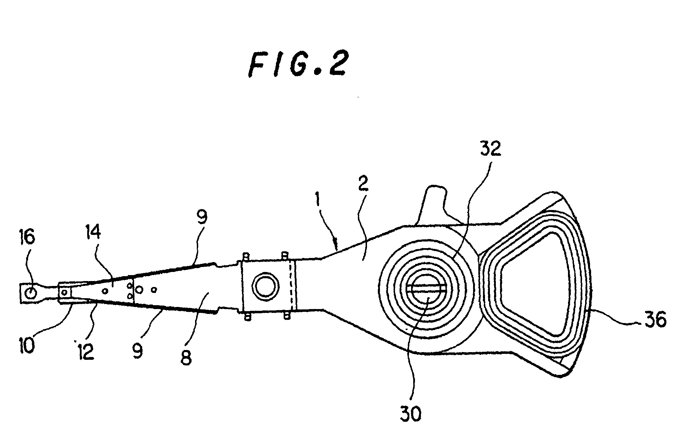

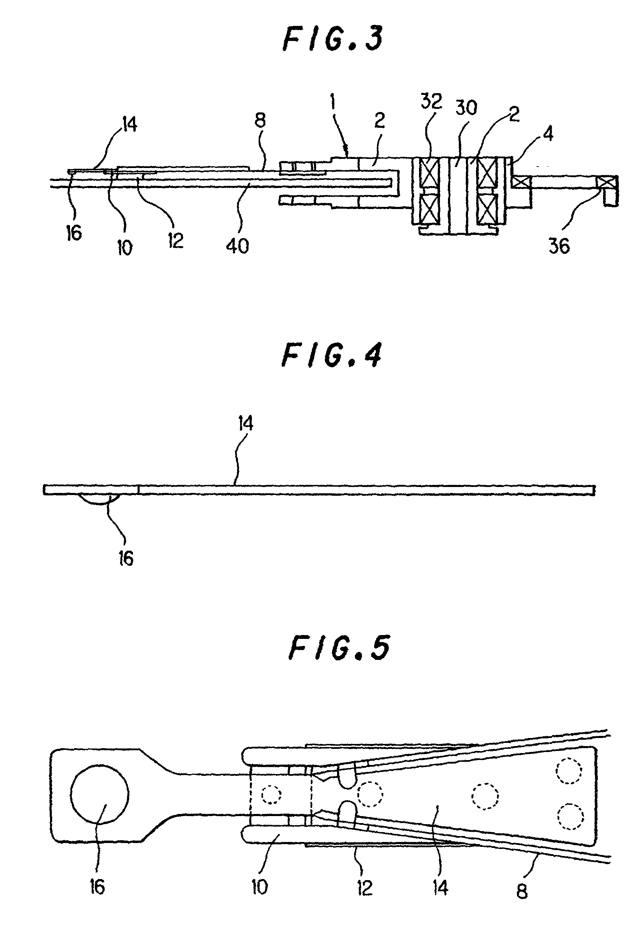

Fig. 1 shows a structure in which the present invention is applied to a magnetic hard disk drive. Figs. 2 and 3 are a plan view and a side elevational view of an example of a rotary actuator assembly used in the embodiment shown in Fig. 1. A rigid arm 2 of the rotary actuator assembly 1 is made of, for example, aluminum by die-casting. On end of a suspension 8 made of, for example, stainless steel is fixed to a mount region 6 of the rigid arm 2. A pair of flanges 9 are formed at predetermined regions on both sides of the suspension 8. The part of the suspension 8 where the flanges 9 are formed is referred to by a load beam portion, and the other part where the flanges 9 are not formed is referred to by a spring portion. A head slider 12 including a magnetic head is mounted through a flexure 10 on the side of the magnetic hard disk 40 in the vicinity of the other end of the suspension 8.

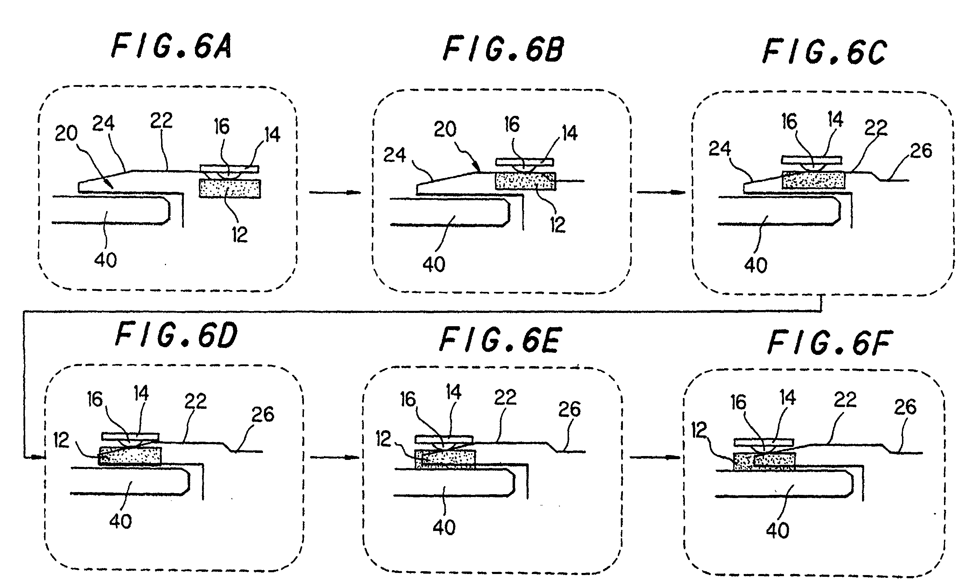

A projection carrying plate 14 is fixed to the opposite side of the magnetic hard disk 40 of the suspension 8. A spherical projection 16 that projects toward the disc 40 is formed at the end portion by the formation of a dimple as shown in Figs. 4 and 5. The spherical projection 16 is provided at a predetermined position on a longitudinal centerline of the carrying plate 14. The carrying plate 14 is fixed by welding or the like (for example, welds at positions indicated by dotted circles in Fig. 5) so that its longitudinal centerline is aligned with a longitudinal centerline of the suspension 8 and the spherical projection 16 is located further from the suspension 8 than the head slider 12.

A hub portion 4 of the rigid arm 2 of the rotary actuator assembly 1 is coupled rotatably with the fixed shaft 30 through a bearing 32. A VCM (Voice Coil Motor) 36 is provided on a portion which is formed integrally with the hub portion 4 of the rigid arm 2 and which extends opposite the suspension 8 with respect to the fixed shaft 30. The drive force of the VCM 36 causes the arm 2 to rotate about the centerline of the fixed shaft 30 to thereby the head slider 12 at a predetermined position of the magnetic hard disk 40.

A slant base 20 is provided in the vicinity of an outer circumference of the disk 40 and includes a slant surface 24 which is separated away from the surface of the disk 40 in accordance with a radial outward distance of the disk 40, a flat surface 22 which is parallel to the surface of the disk 40 contiguous with the slant surface 24, and a parking recess 26 which is contiguous with the flat surface 22 for defining a lock position of the rotary actuator assembly 1. A height of the recess 26 of the slant base 22 is determined so that a height of the head slider 12 when the projection 16 is positioned in the recess 26 is equal to a height of the head slider 12 when the head slider 12 effects a write/read operation to the disk 40. The slant base 20 is supported by a slant base support member 28 which in turn is fixed to a housing base (not shown).

Figs. 6A to 6B show a series of loading operation according to the embodiment. First of all, as shown in Fig. 6A, the projection 16 is located in the recess 26 of the slant base 20 and is locked therein (i.e., the projection is positioned in a stay position). At this time, the height of the head slider 12 is equal to that of the head slider 12 when the latter effects the write/read operation to the disk 40. Subsequently, as shown in Fig. 6B, the VCM 36 causes the rigid arm 2 and the suspension 8 to move inwardly of the disk 40 to thereby move the projection 16 from the recess 26 to the flat surface 22. In this case, a lift-up amount of the head slider 12 from the disk 40 is 200µm. As shown in Fig. 6C, when the projection 16 reaches a load starting position which is a terminal position of the flat surface 22, the VCM 36 has once stopped. Subsequently, the VCM causes the projection 16 to move along the slant surface 24 (see Fig. 6D). Then, as shown in Fig. 6E, the VCM 36 holds the projection 16 on the slant surface 24 until the head slider 12 is subjected to the aerial film pressure from the disk 40. When the head slider 12 is subjected to the aerial film pressure from the disk 40, the VCM 36 causes the projection 16 to move radially inwardly of the disk 40 (see Fig. 6F). Thus, the head slider 12 may be lifted to effect the write/read operation to the disk 40. As described above, the height of the head slider 12 relative to the disk 40 in the stay position shown in Fig. 6A, i.e., in the lock position is equal to the height of the head slider 12 which has been lifted relative to the disk 40 for effecting the writing/reading as shown in Fig. 6F. Accordingly, there is no loading loss.

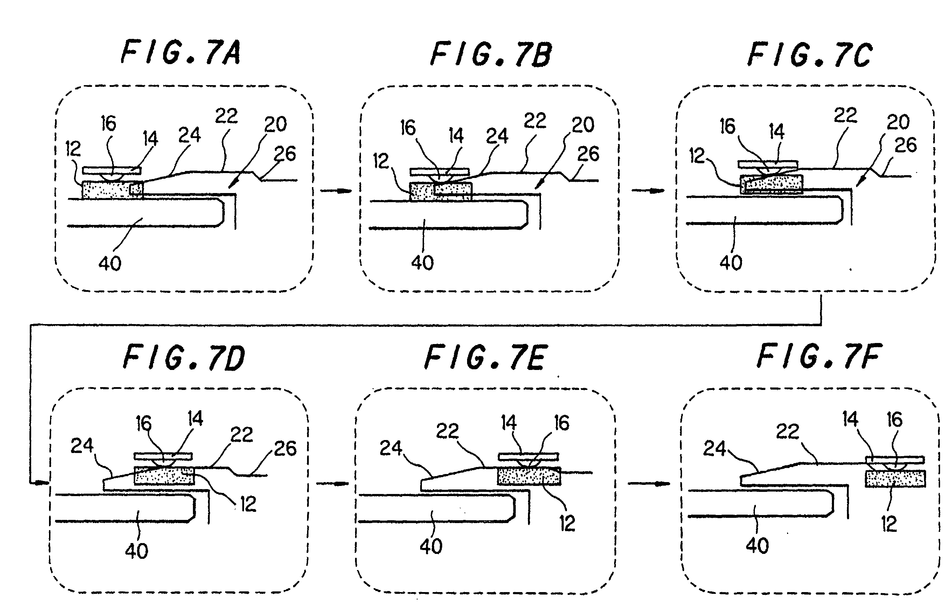

Figs. 7A to 7F show a series of unloading operation according to the embodiment. First of all, as shown in Fig. 7A, the VCM 36 causes the suspension 8 (hence, the projection 16 and the head slider 12) to stop at a standby position prior to the slant base 20 on the disk 40. Subsequently, as shown in Fig. 7B, the VCM 36 causes the suspension 8 to moved to the outer periphery of the disk 40 to thereby engage the projection 16 with the end portion of the slant surface 24. The position at this time is an unload start position. Next, the VCM 36 causes the suspension 8 to further move to the outer periphery of the disk 40, whereby the projection 16 is moved on the slant surface 24 (see Fig. 7C), is moved along the flat surface 22 (see Fig. 7D), is out of the region of the disk 40 (see Fig. 7E), reaches the recess 26 (i.e., in the stay position) and is locked in the recess 26 (see Fig. 7F). As described above, the height of the head slider 12 40 in the standby position shown in Fig. 7A (i.e., the height of the head slider 12 which has been lifted up to effect the writing/reading operation to the disk 40) is equal to the height of the head slider 12 in the stay position, i.e., the lock position as shown in Fig. 7F. Accordingly, there is no loading loss.

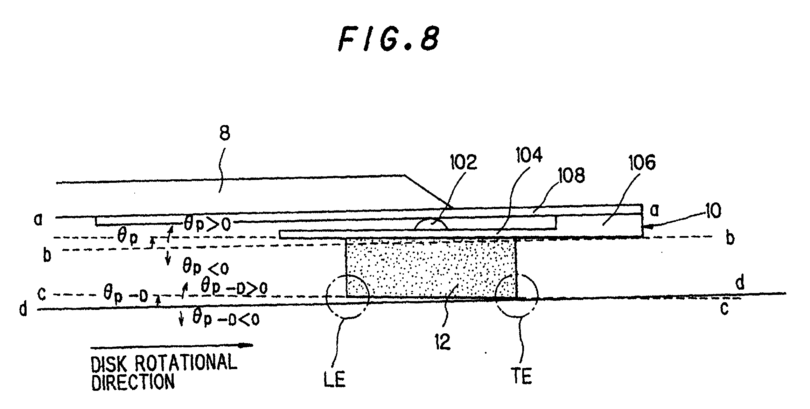

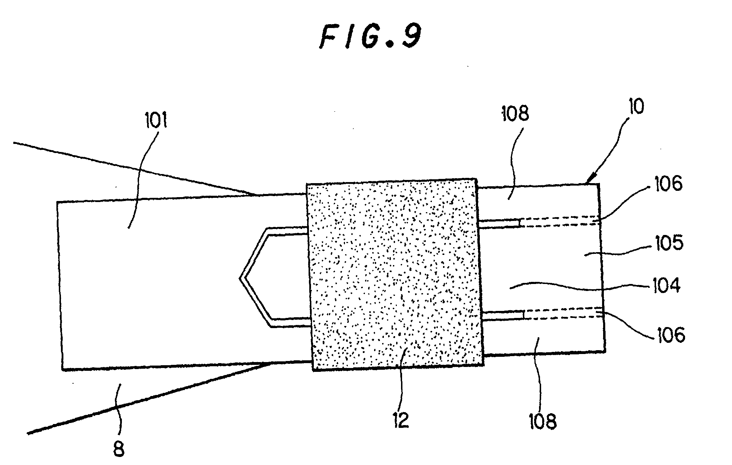

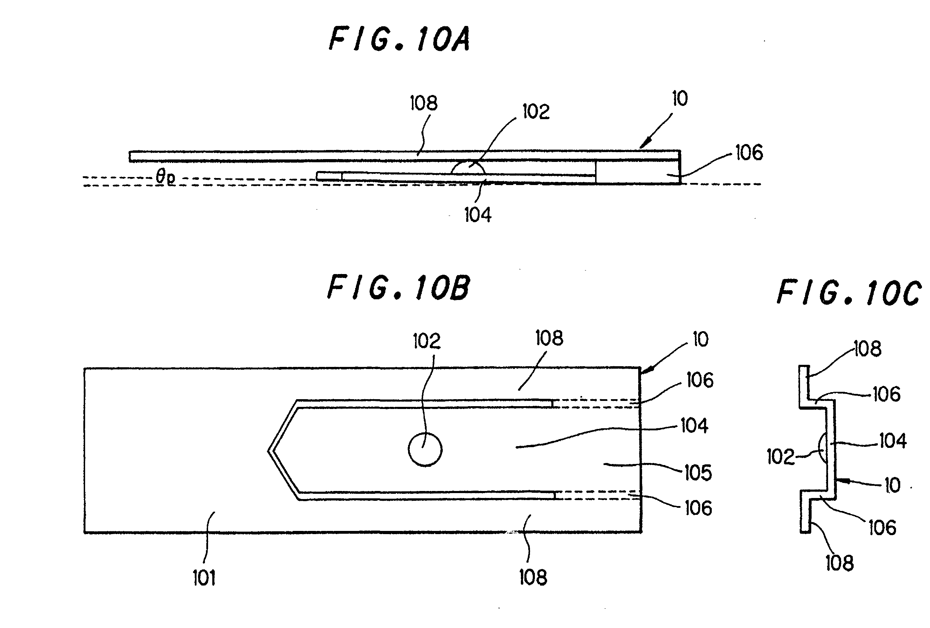

Figs. 8 and 9 are a side elevational view and a bottom view showing an example of the suspension, the flexure and the slider according to the embodiment shown in Fig. 1. Figs. 10A, 10B and 10C are a side elevational view, a plan view and a frontal view showing a detail of the flexure shown in Fig. 8. The flexure 10 includes a fastening portion 101 fixed to the suspension 8, a tongue portion 104 having a longitudinal centerline aligned with the longitudinal centerline of the suspension 8 and having a surface on the side of the disk 40 on which surface the head slider 12 is mounted, a pair of thin flexible outer fingers 108 extending in parallel to the tongue portion 16 from the fastening portion 101, and a coupling portion 105 for coupling the tongue portion 104 and the fingers 108 through stepped portions 106. Due to the existence of the stepped portions 106, the tongue portion 104 is closer to the disk 40 than the fingers 108. A spherical projection 102 which constitutes a load receiving point for receiving a load from the suspension 8 is formed on a surface of the tongue 104 opposite the disk 40.

The head slider mounting surface of the flexure 10, i.e., the tongue portion 104 has an angle θp so that a spaced distance of the leading end LE of the head slider 12 to the disk 40 is longer than a spaced distance of the trailing end TE of the head slider 12 to the disk 40. Namely, the tongue portion 104 has a positive mount pitch angle θp relative to the fingers 108. Thus, in order to form such a positive pitch angle θp, it is sufficient to make the angle θp on both the convex and concave pressing dies for the stepped portions 106.

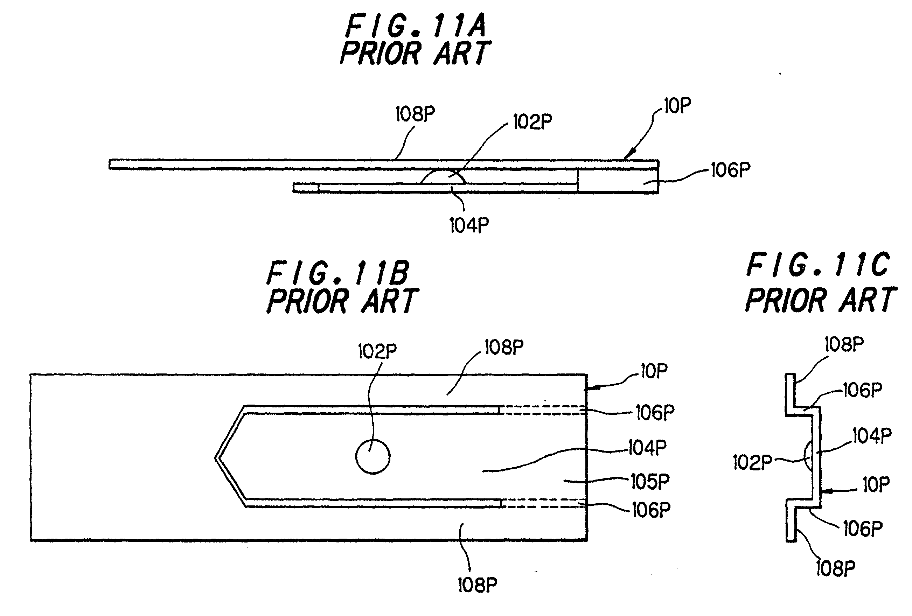

Figs. 11A, 11B and 11C are a side elevational view, a plan view and a frontal view showing a detail of the conventional flexure. In Figs. 11A to 11C, the same numerals with a character P are used to indicate the same or like components as those of the flexure according to the present invention shown in Figs. 11A to 11C. As shown in Figs. 11A to 11C, the tongue portion 104P of the conventional flexure 10P has no angle θp relative to the fingers 108P.

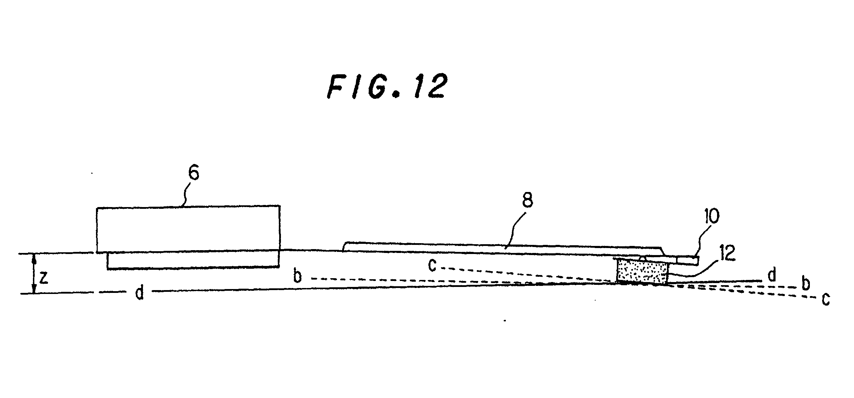

Fig. 12 shows a relationship between the leading end LE and the trailing end TE of the slider 12 and the disk surface in the loading operation and the unloading operation according to the embodiment shown in Fig. 1. Assuming that z is the head mount height (i.e., the height of the arm mount region 6, b-b is the line which is parallel with the suspension 8, c-c is the line which is parallel with the surface of the slider 12, i.e., the tongue 104 of the flexure 10, and d-d is the line representing the disk surface, the pitch angle θp is an angle defined by the line c-c and the line b-b. Assuming that θz-D is the angle defined by the lines b-b and d-d, i.e., the angle defined by the suspension 8 and the disk surface, the angle (θp-D) defined by the slider 12 and the disk surface is given as follows:

$$(\theta p\text{-}D)=\theta p+(\theta z\text{-}D)$$

By mounting the suspension 8 at the height z so as to meet the condition, θp+(θz-D)>0, it is possible to meet the relationship, (θp-D)>0.

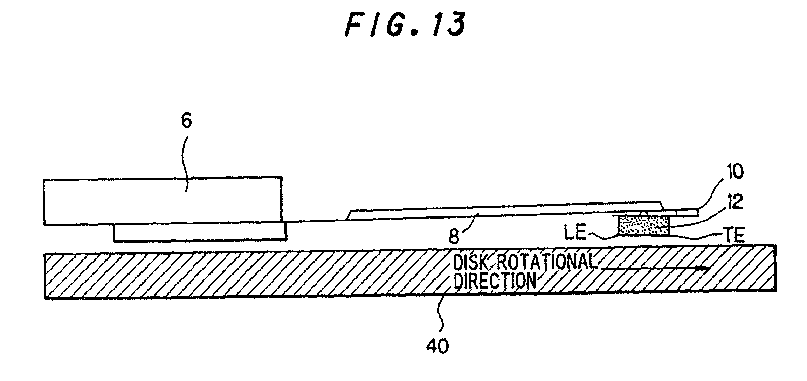

Fig. 13 shows a relationship between the leading end LE and the trailing end TE of the slider 12 and the disk surface in the loading operation and the unloading operation according to the embodiment shown in Fig. 1. As described above, by meeting the conditions θp>0 and (θp-D)>0, in the loading operation and the unloading operation, the leading end LE of the head slider 12 is always is much further spaced from the disk 40 than the trailing end TE. Accordingly, a dynamic pressure due to an aerial film between the slider 12 and the disk 40 is likely to occur, and hence, a lifting force occur at the position where the slider 12 is located at a relatively high level. Thus, the slider 12 is not brought into contact with the disk 40, and the loading and unloading operation is well performed.

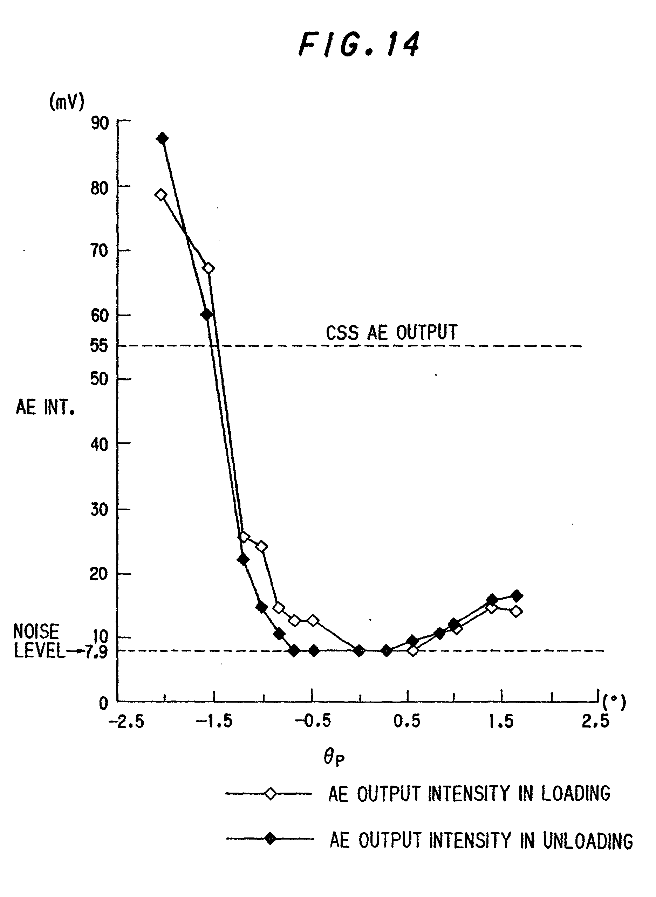

Fig. 14 is a graph showing a change in an AE (acoustic emission) sensor fixed to the suspension 8 in the loading and the unloading in the case where the angle defined between the slider mount surface of the flexure and the suspension 8, i.e., the mount pitch angle θp is changed. The graph shows that the larger the AE intensity, the larger the collision energy will become. As is apparent from Fig. 14, it is preferable that the head slider mount surface of the flexure 10, i.e., the angle of the tongue 104 be about 0.3 degrees. Incidentally, the output of the AE sensor in case of the CSS system is about 55mV.

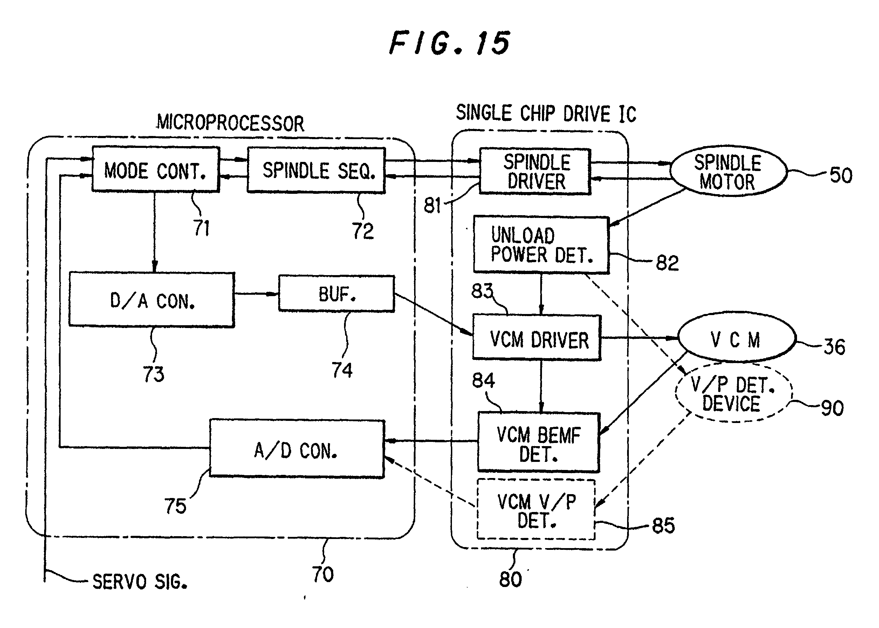

Fig. 15 is an example of a control system for controlling the mechanical driver used in the embodiment shown in Fig. 1. The controlling system includes a microprocessor 70 and a chip drive IC 80. The microprocessor 70 is provided with a mode controller 71, a spindle sequencer 72, a D/A converter 73, a buffer 74 and an A/D converter 75. A single chip drive IC 80 is provided with a spindle driver 81, an unload power detector 82, a VCM driver 83, a VCM-BEMF detector 84 and a VCM velocity/position detector 85. The VCM velocity/position detector 85 corresponds to a velocity/position detecting device 90 provided exclusively for detecting the position and the velocity of the VCM 36. The VCM velocity/position detector 85 and the velocity/position detecting device 90 are provided for the purpose of performing super-low speed control of the VCM 36.

The mode controller 71 receives a servo signal and an output signal of the spindle sequencer 72 and the A/D converter 75 to control the operational modes of the VCM 36 and at the same time to control of modes such as a rotational stop/start of a spindle motor 50 for drivingly rotating the disk 40 and an on/off operation of the spindle servo. The spindle sequencer 72 receives an output signal of the mode controller 71 and the a feedback signal from the spindle driver 81 to select the rotational speed of the spindle motor 50 and to output an output signal representative of the rotational speed.

The spindle driver 81 receives the velocity signal from the spindle sequencer 72 to drive the spindle motor 50. In this example, the spindle motor 50 is of a three-phase full wave sensorless type and is not provided with a position detecting element such as a Hall element. The unload power detector 82 rectifies the reverse electromotive force of the spindle motor 50 in the off-state of the power source and supplies the VCM driver 83 and the velocity/position detecting device 90 with it.

The D/A converter 73 converts a digital signal outputted from the mode controller 71 into an analog signal. The buffer 74 is a prepositioned amplifier for inputting the output signal of the D/A converter 73 into the VCM driver 83. The driver 83 receives the output signal of the buffer 74 to drive the VCM 36.

The BEMF detector 84 outputs an analog signal representative of the position and the velocity of the VCM 36, from a reverse emf signal from the coil of the VCM 36 and the output signal of the VCM driver 83. The A/D converter 75 converts an analog signal outputted from the BEMF detector 84 or VCM velocity/position detector 85 into a digital signal to output it to the mode controller 71.

When data are written or read relative to the disk 40 under the normal use condition of the controlling system shown in Fig. 15, i.e., by the head, the VCM 36 is controlled through the mode controller 71, the D/A converter 73, the buffer 74 and the VCM driver 83 in accordance with the servo signal inputted into the microprocessor 70, and the spindle motor 50 is controlled through the mode controller 71, the spindle sequencer 72 and the spindle driver 81.

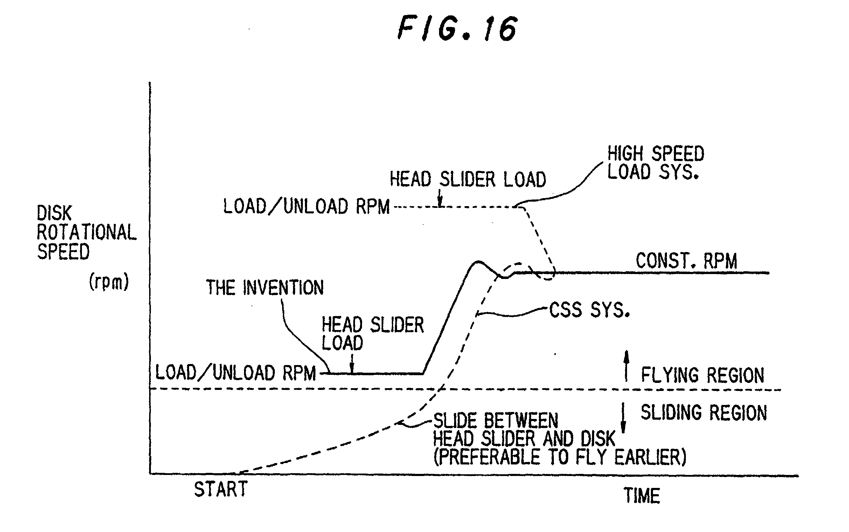

Fig. 16 shows an example of the disk rpm in the loading and unloading in the embodiment shown in Fig. 1. As shown in Fig. 16, the spindle sequencer 72 and the spindle driver 81 shown in Fig. 15 control the spindle motor 50 so that the rpm of the disk 40 exceeds a flying minimum velocity of the head slider 12 in the loading/unloading operation and is at the same time smaller than a normal constant rpm.

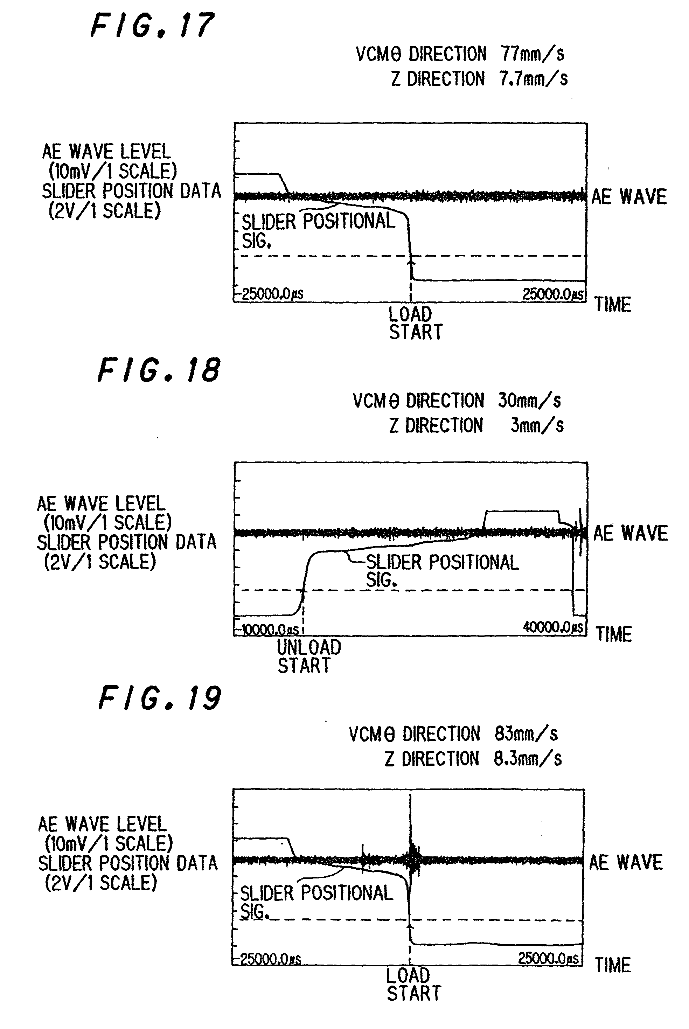

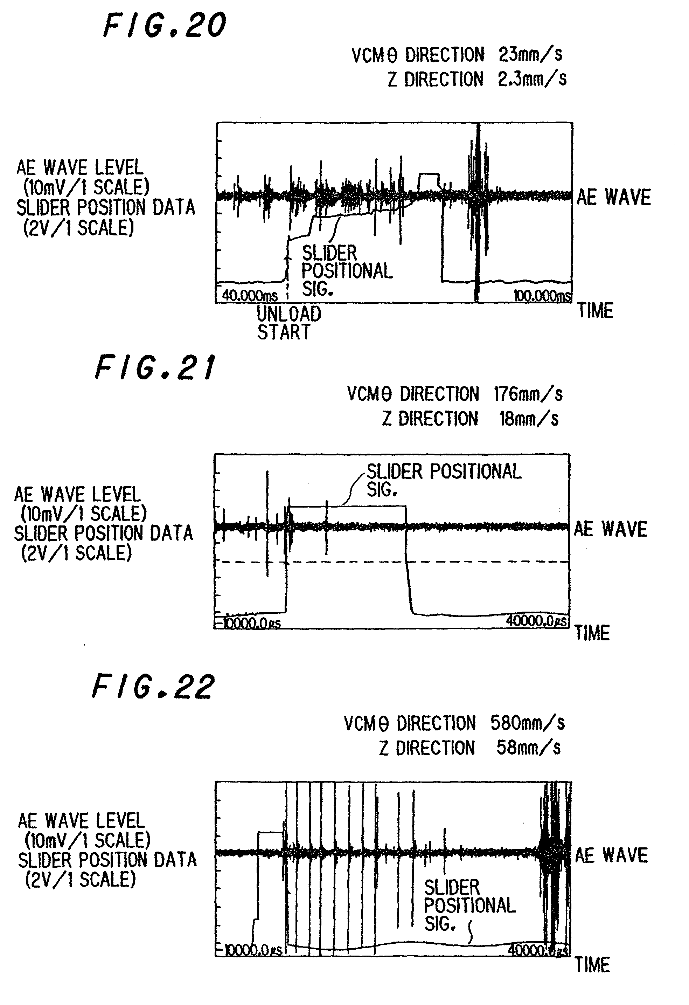

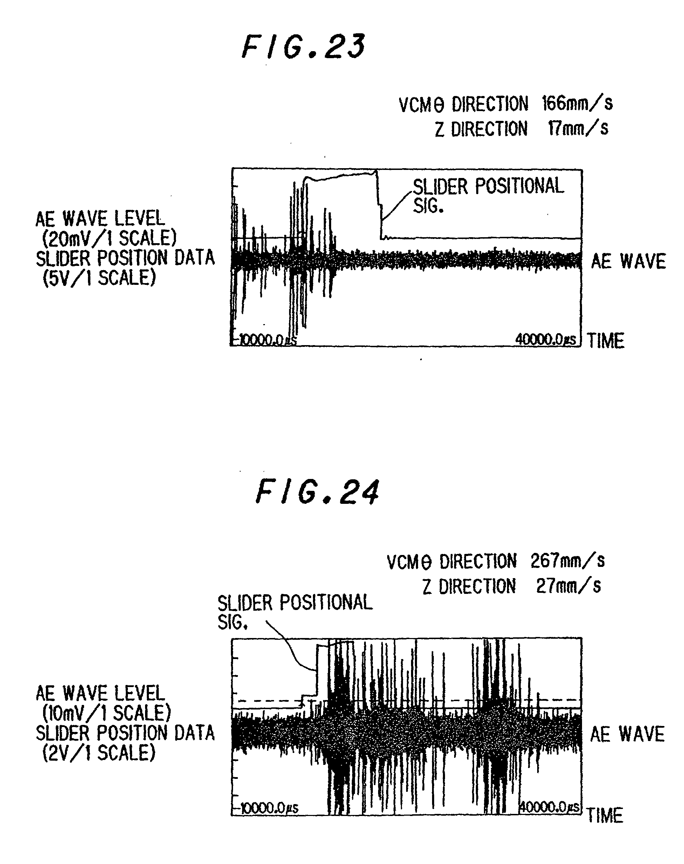

Fig. 17 shows an example of the output of the AE sensor fixed to the suspension 8 in the case where the rpm of the disk 40 exceeded the flying minimum velocity of the head slider 12 and was smaller than the constant rpm and the loading was carried out. Fig. 18 shows an example of the output of the AE sensor fixed to the suspension 8 in the case where the rpm of the disk 40 exceeded the flying minimum velocity of the head slider 12 and was smaller than the constant rpm and the unloading was carried our. Fig. 19 shows an example of the output of the AE sensor fixed to the suspension 8 in the case where the rpm of the disk 40 was kept at the constant rpm and the loading was carried out. Fig. 20 shows an example of the output of the AE sensor fixed to the suspension 8 in the case where the rpm of the disk 40 was kept at the constant rpm and the unloading was carried out. Fig. 21 shows an example of the output of the AE sensor fixed to a suspension in a first conventional article in the case where the rpm of the disk was kept at the constant rpm and the loading was carried out. Fig. 22 shows an example of the output of the AE sensor fixed to the suspension in the first conventional article in the case where the rpm of the disk was kept at the constant rpm and the unloading was carried out. Fig. 23 shows an example of the output of the AE sensor fixed to a suspension in a second conventional article in the case where the rpm of the disk was kept at the constant rpm and the loading was carried out. Fig. 24 shows an example of the output of the AE sensor fixed to the suspension in the second conventional article in the case where the rpm of the disk was kept at the constant rpm and the unloading was carried out. In these figures, a VCMθ direction means a radial direction of the disk, and a Z-direction means a direction perpendicular to the disk surface.

As is apparent from Figs. 17 through 24, if the rotational speed (rpm) of the disk 40 is kept at a level not lower than the flying minimum velocity of the head slider 12 but lower than the constant rpm, the AE wave level, i.e., collision energy becomes small. Thus, the following advantages may be insured.

(a) Even if a roll angle or a pitch angle is generated, or even if the posture of the head slider 12 is improper, it is possible to suppress the collision energy between the head slider 12 and the disk 40 at a minimum possible level.
(b) Even if the posture of the head slider 12 would be improper due to the manufacture allowance or assembling allowance of mechanical parts, it is possible to suppress the collision energy between the head slider 12 and the disk 40 at a minimum possible level.
(c) Even if the posture of the head slider 12 would be improper due to the external vibration or collision, it is possible to suppress the collision energy between the head slider 12 and the disk 40 at a minimum possible level.
(d) Unless the posture of the head slider 12 is improper, the collision energy between the head slider 12 and the disk 40 becomes zero.

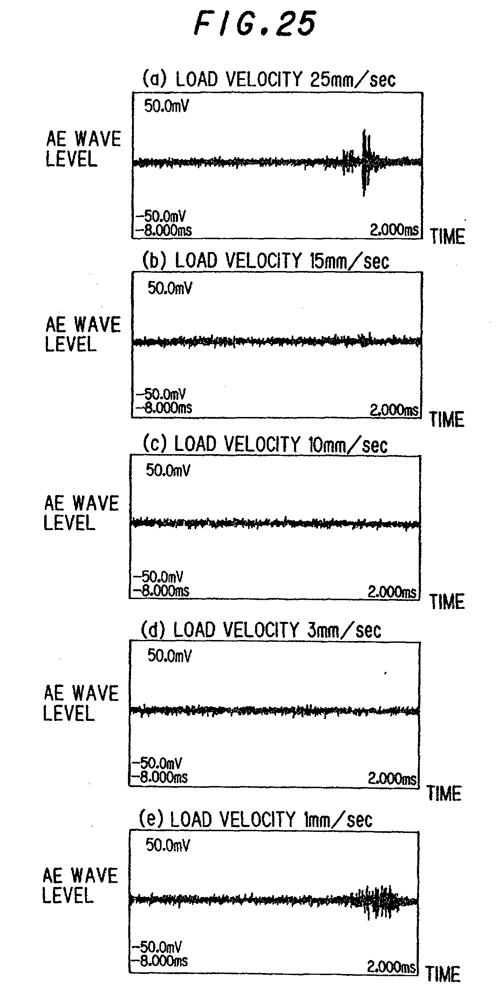

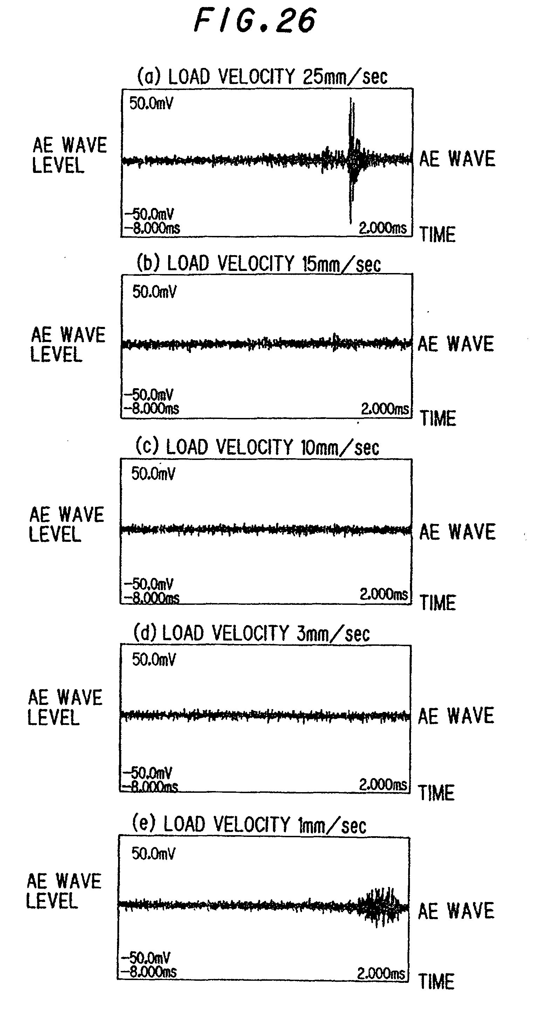

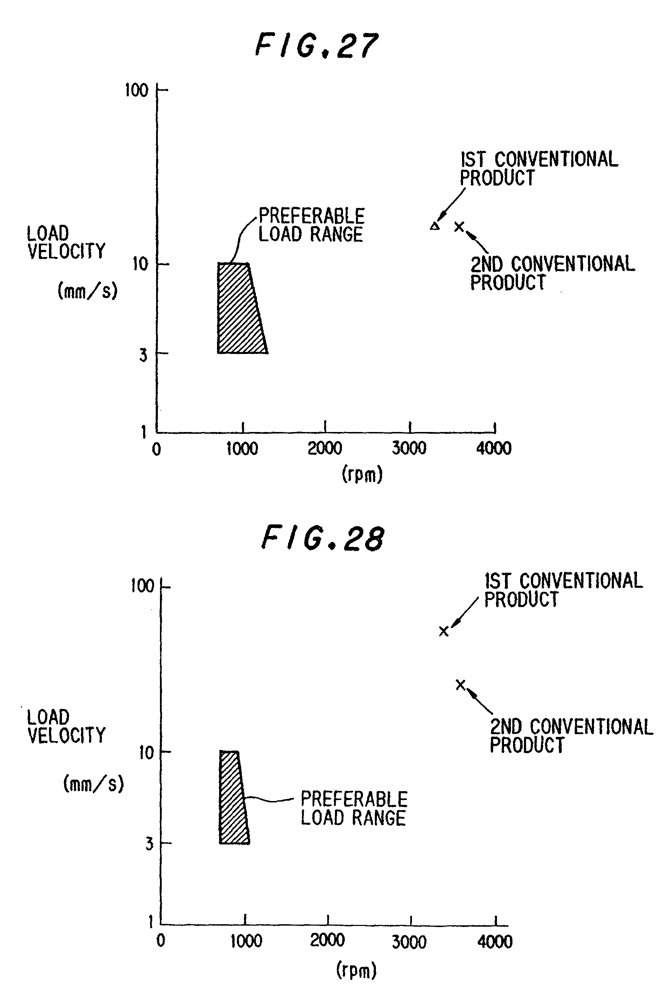

Figs. 25A to 25E show examples of outputs of the AE sensor fixed to the suspension in the case where the head loading speed in the direction perpendicular to the disk surface was changed while keeping the head pitch angle at +0.135°, and Figs. 26A to 26E show examples of outputs of the AE sensor fixed to the suspension in the case where the head loading speed in the direction perpendicular to the disk surface was changed while keeping the head pitch angle at +0.235°. From the experimental results shown in Figs. 25 and 26, the preferable range of the head loading speed in the direction perpendicular to the disk surface is not higher than 10mm/sec but not lower than 3mm/sec as shown in Fig. 27. Also, the preferable range of the head unloading speed in the direction perpendicular to the disk surface is not higher than 10mm/sec but not lower than 3mm/sec as shown in Fig. 28.

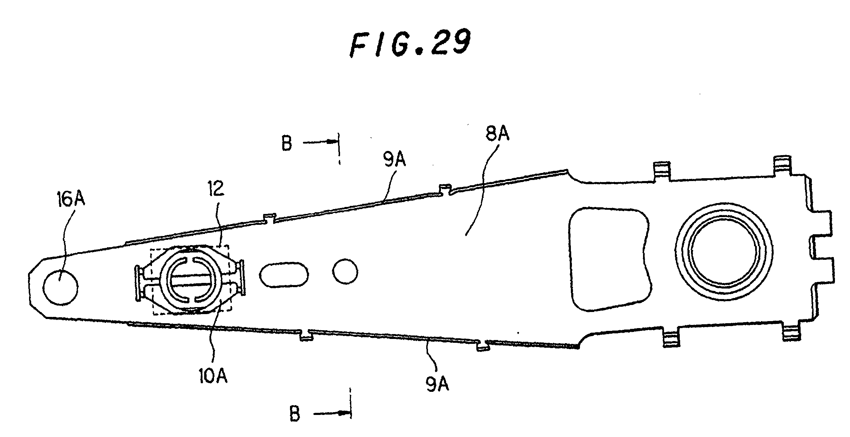

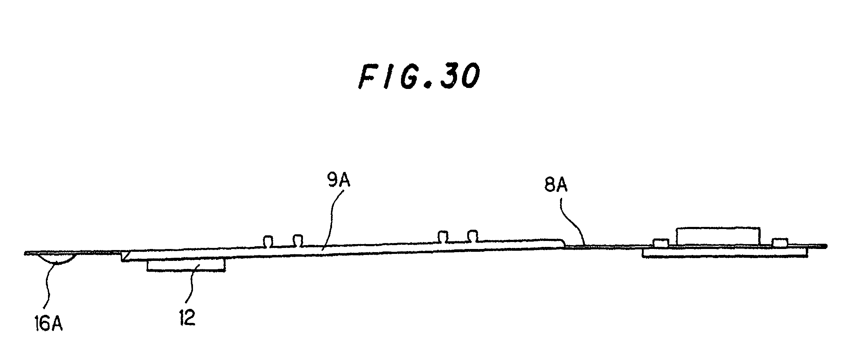

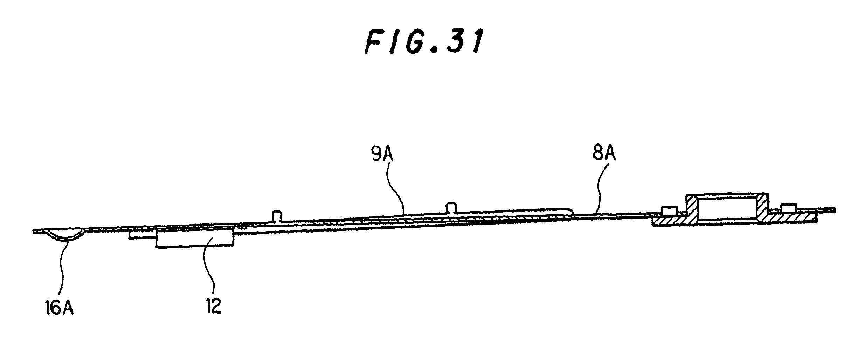

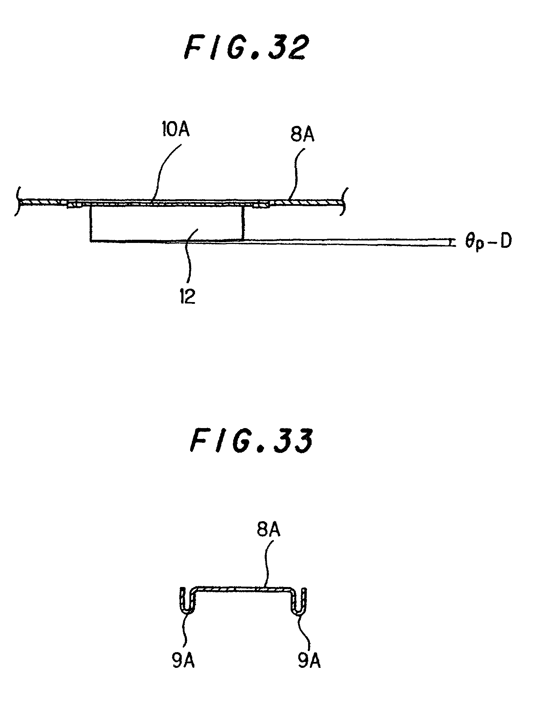

Figs. 29 and 30 are a bottom view and a side elevational view showing a structure of a suspension, a flexure and slider in accordance with a second embodiment of the invention which is applied to a magnetic hard disk drive. Fig. 31 is a longitudinal sectional view showing the suspension, flexure and the slider shown in Figs. 29 and 30. Fig. 32 is a fragmentary sectional view showing a detail of the flexure shown in Fig. 31. Fig. 33 is a cross-sectional view taken along the line B-B of Fig. 29. Direct distinctions between the second embodiment shown in these figures and the first embodiment shown in Figs. 1 to 5 are that in the second embodiment, a spherical projection 16A projecting toward the disk surface is directly formed on a suspension 8A, a flexure 10A is of a so-called round type, and flanges 9A formed on both sides of the suspension 8A have fold-back portions.

The flexure 10A is fixed to the suspension 8A so as to meet the relationship, $\theta p>0$. Accordingly, in the same manner as in the case shown in Fig. 8, the angle of the surface of the slider 12 to be mounted on the flexure 10A also meet the relationship, $\theta p>0$ and the angle between the surface of the slider 12 and the disk surface meets the relationship, $(\theta p-D)>0$. Accordingly, in the same manner as in the case shown in Fig. 8, the loading and unloading can be carried out without any contact between the slider 12 and the disk. Incidentally, the angle of the flexure 10A relative to the suspension 8A, i.e., the mount pitch angle $\theta p$ of the head slider 12 is preferably approximately 0.3 degrees in the same manner as in Fig. 8.

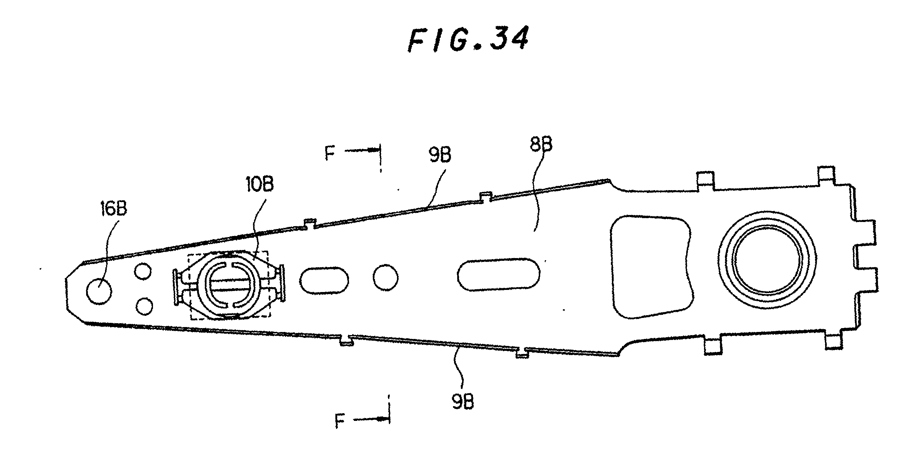

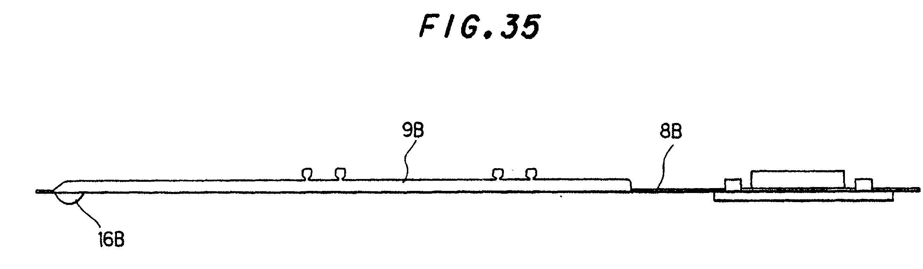

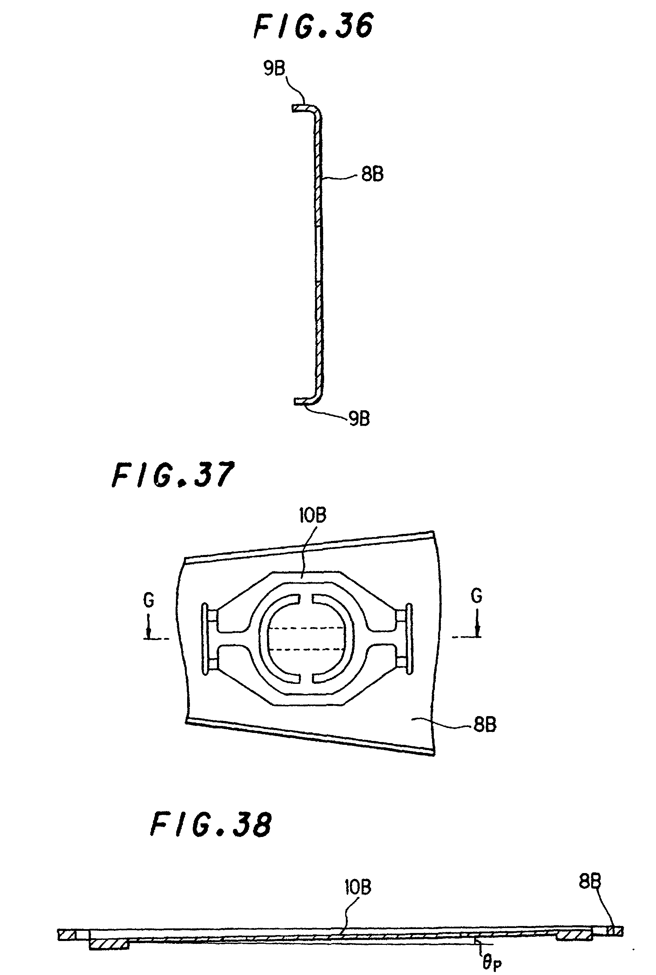

Figs. 34 and 35 are a bottom view and a side elevational view showing a structure of a suspension and a flexure in accordance with a third embodiment of the invention which is applied to a magnetic hard disk drive. Fig. 36 is a cross-sectional view taken along the line F-F of Fig. 34. Fig. 37 is a bottom view showing a detail of the flexure shown in Fig. 34. Fig. 38 is a sectional view taken along the line G-G of Fig. 37. In the third embodiment, the spherical projection 16B projecting toward the disk surface is directly formed on the suspension 8B in the same manner as in the second embodiment shown in Figs. 29 to 33 and the flexure 10B is of the so-called round type. A distinction between the second embodiment and the third embodiment is that the flanges 9B formed on both sides of the suspension 8B has no fold-back portions.

The flexure 10B is fixed to the suspension 8B so as to meet the relationship, $\theta p>0$. Accordingly, in the same manner as in the second embodiment, the angle of the surface of the slider 12 to be mounted on the flexure 10B also meet the relationship, $\theta p>0$. Incidentally, the angle of the flexure 10B relative to the suspension 8B, i.e., the mount pitch angle $\theta p$ of the head slider 12 is preferably approximately 0.3 degrees in the same manner as in the second embodiment.

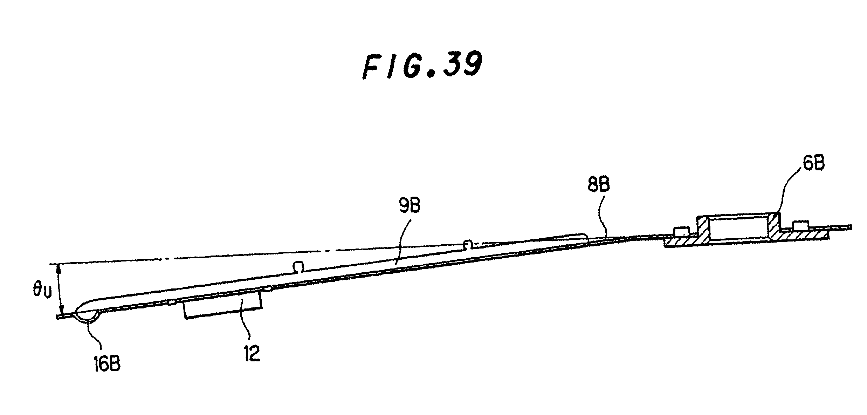

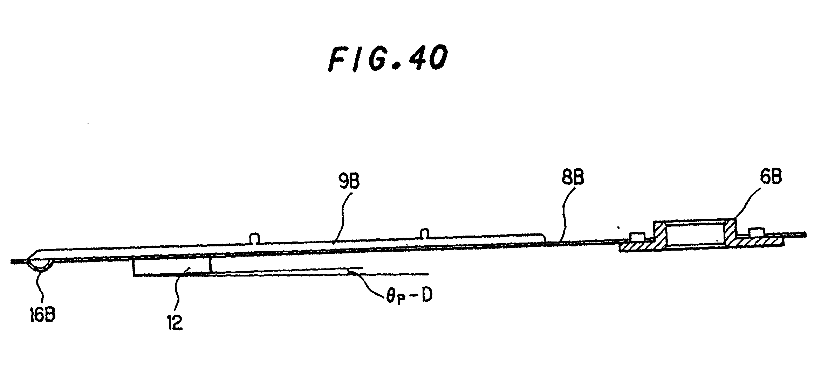

Fig. 39 is a longitudinal sectional view showing a state of the suspension, the flexure and the slider in the unloading according to the third embodiment of the invention, and Fig. 40 is a longitudinal sectional view showing a state of the suspension, the flexure and the slider in the loading according to the third embodiment of the invention. As shown in Fig. 40, the angle between the surface of the slider 12 and the disk surface meets the relationship, (θp-D)>0. Accordingly, the loading and unloading can be carried out without any contact between the slider 12 and the disk.

In the foregoing embodiments, the arm which supports the head is arranged above the magnetic disk but the present invention is not limited thereto. The invention may be applied to the case where the arm is arranged below the magnetic disk.

Also, the present invention is not limited to the application where a single magnetic disk is used. It is apparent for those skilled in the art to apply the invention to the case where a plurality of magnetic disks are used.

Furthermore, the present invention is not limited to the magnetic disk and may be applied to an optical disk or a magnetoptical disk.

In the disk device according to the present invention, since the head slider mount surface of the flexure is slanted so that a spaced distance of the leading end of the head slider relative to the disk is longer than a spaced distance of the trailing end of the head slider relative to the disk, in the loading and unloading, the leading end of the head slider is always further spaced away from the disk than the trailing end so that the loading and unloading may be carried out without any contact between the slider and the disk. Even if the slider and the disk would be brought into contact with each other, the contact is very weak so that the damage of the slider and the disk is small and any fatal damage would hardly occur.

## Claims

**1.** A disk device for moving an arm (2) which supports a head slider (12) and for positioning said head slider (12) at a predetermined position of a disk (40), comprising:

a suspension (8) fixed at one end to said arm (2); and
a flexure (10) which is provided in the vicinity of the other end of said suspension (8) and on which said head slider (12) is mounted;

**characterised in that**
a positive mount pitch angle (θp) defined between a head slider mount surface (104) of said flexure (10) and the suspension (8) is selected so that a spaced distance of a leading end (LE) of said head slider relative to said disk (40) is always longer than a spaced distance of a trailing end (TE) of said head slider (12) relative to said disk (40) in the loading operation and the unloading operation.

**2.** The disk device according to claim 1, wherein the angle defined between said head slider mount surface (104) of said flexure (10) and the suspension (8) is approximately 0.3 degrees.

## Patentansprüche

**1.** Platteneinrichtung zum Bewegen eines einen Kopfschieber (12) haltenden Armes (2) und zum Positionieren des Kopfschiebers (12) an einer vorbestimmten Position einer Platte (40), mit:

einer Aufhängung (8), die an einem Ende am Arm (12) befestigt ist, und
einem Verformungsteil (10), das in der Nähe des anderen Endes der Aufhängung (8) vorgesehen ist und an dem der Kopfschieber (12) befestigt ist,

**dadurch gekennzeichnet, dass**
ein zwischen einer Kopfschieber-Befestigungsfläche (104) des Verformungsteils (10) und der Aufhängung (8) definierter positiver Befestigungsanstellwinkel (θp) so gewählt ist, dass bei der Ladeoperation und der Entladeoperation ein räumlicher Abstand eines führenden Endes (LE) des Kopfschiebers relativ zur Platte (40) stets größer als ein räumlicher Abstand eines gezogenen Endes (TE) des Kopfschiebers (12) relativ zur Platte (40) ist.

**2.** Platteneinrichtung nach Anspruch 1, wobei der zwischen der Kopfschieber-Befestigungsfläche (104) des Verformungsteils (10) und der Aufhängung (8) definierte Winkel annähernd 0,3 Grad beträgt.

## Revendications

**1.** Unité à disques afin de déplacer un bras (2) supportant une glissière de tête (12) et pour positionner ladite glissière de tête (12) en une position prédéterminée d'un disque (40), comprenant :

une suspension (8) fixée à une extrémité audit bras (2) ; et
une courbure (10) qui est prévue à proximité de l'autre extrémité de ladite suspension (8) et sur laquelle est montée ladite glissière de tête (12) ;

**caractérisée en ce que**
un angle de pas de montage positif (θp) défini entre une surface de montage (104) de glissière de tête de ladite courbure (10) et la suspension (8) est choisi de sorte qu'une distance d'une extrémité antérieure (LE) de ladite glissière de tête par rapport audit disque (40) est toujours supérieure à une distance d'une extrémité postérieure (TE) de ladite glissière de tête (12) par rapport audit disque (40) durant l'opération de chargement et l'opération de déchargement.

**2.** Unité à disques selon la revendication 1, dans laquelle l'angle défini entre ladite surface de montage (104) de glissière de tête de ladite courbure (10) et la suspension (8) est approximativement 0,3 degré.

FIG. 1
40
50
4
32
2
6
36
8
9
9
30
1
14
16
12
24
10
28
22
20
26

FIG.2
36
32
30
2
1
9
8
9
14
12
16
10

FIG. 3

14
8
1
2
32
30
2
4
16
10
12
40
36

FIG. 4

14
16

FIG. 5

16
10
12
14
8

FIG.6A
14
16
12
22
24
20
40
FIG.6B
14
16
12
20
24
40
FIG.6C
26
22
14
16
24
40
FIG.6D
26
22
14
16
12
40
FIG.6E
26
22
14
16
12
40
FIG.6F
26
22
14
16
12
40

FIG. 7A
FIG. 7B
FIG. 7C
FIG. 7D
FIG. 7E
FIG. 7F
12
14
16
20
22
24
26
40

FIG. 8

8
102
104
108
106
10
12
TE
LE
a
b
c
d
θp>0
θp<0
θp-D>0
θp-D<0
θp
θp-D
DISK ROTATIONAL
DIRECTION

FIG.9
10
106
105
104
106
108
108
12
101
8

10
106
102
104
108
$\theta_D$
10
106
104
105
106
108
108
102
101
108
106
104
10
106
108
102

FIG. 10A

FIG. 10B

FIG. 10C

10P
106P
102P
104P
108P
10P
106P
104P
105P
106P
108P
102P
108P
108P
106P
104P
10P
106P
108P
102P

FIG. 11A PRIOR ART

FIG. 11B PRIOR ART

FIG. 11C PRIOR ART

FIG. 12
10
12
8
6
d
b
c
c
b
d
z

FIG. 13
10
12
TE
LE
8
DISK ROTATIONAL DIRECTION
40
6

FIG. 14

(mV)
AE INT.
90
80
70
60
55
50
40
30
20
10
NOISE LEVEL→7.9
0
CSS AE OUTPUT
-2.5
-1.5
-0.5
0.5
1.5
2.5
(°)
$\theta_P$
AE OUTPUT INTENSITY IN LOADING
AE OUTPUT INTENSITY IN UNLOADING

FIG. 15
SINGLE CHIP DRIVE IC
MICROPROCESSOR
SPINDLE MOTOR
50
V C M
36
V/P DET. DEVICE
90
SPINDLE DRIVER
81
UNLOAD POWER DET.
82
VCM DRIVER
83
VCM BEMF DET.
84
VCM V/P DET.
85
80
SPINDLE SEQ.
72
BUF.
74
A/D CON.
75
70
MODE CONT.
71
D/A CON.
73
SERVO SIG.

FIG. 16
HIGH SPEED LOAD SYS.
CONST. RPM
CSS SYS.
FLYING REGION
SLIDING REGION
HEAD SLIDER LOAD
LOAD/UNLOAD RPM
THE INVENTION
HEAD SLIDER LOAD
LOAD/UNLOAD RPM
SLIDE BETWEEN HEAD SLIDER AND DISK (PREFERABLE TO FLY EARLIER)
START
TIME
DISK ROTATIONAL SPEED
(rpm)

FIG. 17

VCMθ DIRECTION 77mm/s
Z DIRECTION 7.7mm/s

AE WAVE LEVEL
(10mV/1 SCALE)
SLIDER POSITION DATA
(2V/1 SCALE)
AE WAVE
SLIDER POSITIONAL SIG.
-25000.0μs
25000.0μs
TIME
LOAD START

FIG. 18

VCMθ DIRECTION 30mm/s
Z DIRECTION 3mm/s

AE WAVE LEVEL
(10mV/1 SCALE)
SLIDER POSITION DATA
(2V/1 SCALE)
AE WAVE
SLIDER POSITIONAL SIG.
-10000.0μs
40000.0μs
TIME
UNLOAD START

FIG. 19

VCMθ DIRECTION 83mm/s
Z DIRECTION 8.3mm/s

AE WAVE LEVEL
(10mV/1 SCALE)
SLIDER POSITION DATA
(2V/1 SCALE)
AE WAVE
SLIDER POSITIONAL SIG.
-25000.0μs
25000.0μs
TIME
LOAD START

## FIG.20

VCMθ DIRECTION 23mm/s
Z DIRECTION 2.3mm/s

AE WAVE LEVEL
(10mV/1 SCALE)
SLIDER POSITION DATA
(2V/1 SCALE)

AE WAVE
SLIDER POSITIONAL SIG.
40.000ms
100.000ms
UNLOAD START
TIME

## FIG.21

VCMθ DIRECTION 176mm/s
Z DIRECTION 18mm/s

AE WAVE LEVEL
(10mV/1 SCALE)
SLIDER POSITION DATA
(2V/1 SCALE)

SLIDER POSITIONAL SIG.
AE WAVE
10000.0μs
40000.0μs
TIME

## FIG.22

VCMθ DIRECTION 580mm/s
Z DIRECTION 58mm/s

AE WAVE LEVEL
(10mV/1 SCALE)
SLIDER POSITION DATA
(2V/1 SCALE)

AE WAVE
SLIDER POSITIONAL SIG.
10000.0μs
40000.0μs
TIME

FIG.23

VCMθ DIRECTION 166mm/s
Z DIRECTION 17mm/s
SLIDER POSITIONAL SIG.
AE WAVE LEVEL (20mV/1 SCALE)
SLIDER POSITION DATA (5V/1 SCALE)
AE WAVE
-10000.0μs
40000.0μs
TIME

FIG.24

VCMθ DIRECTION 267mm/s
Z DIRECTION 27mm/s
SLIDER POSITIONAL SIG.
AE WAVE LEVEL (10mV/1 SCALE)
SLIDER POSITION DATA (2V/1 SCALE)
AE WAVE
-10000.0μs
40000.0μs
TIME

FIG.25
(a) LOAD VELOCITY 25mm/sec
50.0mV
AE WAVE LEVEL
-50.0mV
-8.000ms
2.000ms
TIME
(b) LOAD VELOCITY 15mm/sec
50.0mV
AE WAVE LEVEL
-50.0mV
-8.000ms
2.000ms
TIME
(c) LOAD VELOCITY 10mm/sec
50.0mV
AE WAVE LEVEL
-50.0mV
-8.000ms
2.000ms
TIME
(d) LOAD VELOCITY 3mm/sec
50.0mV
AE WAVE LEVEL
-50.0mV
-8.000ms
2.000ms
TIME
(e) LOAD VELOCITY 1mm/sec
50.0mV
AE WAVE LEVEL
-50.0mV
-8.000ms
2.000ms
TIME

FIG. 26

(a) LOAD VELOCITY 25mm/sec
50.0mV
AE WAVE LEVEL
AE WAVE
-50.0mV
-8.000ms
2.000ms
TIME
(b) LOAD VELOCITY 15mm/sec
50.0mV
AE WAVE LEVEL
AE WAVE
-50.0mV
-8.000ms
2.000ms
TIME
(c) LOAD VELOCITY 10mm/sec
50.0mV
AE WAVE LEVEL
AE WAVE
-50.0mV
-8.000ms
2.000ms
TIME
(d) LOAD VELOCITY 3mm/sec
50.0mV
AE WAVE LEVEL
AE WAVE
-50.0mV
-8.000ms
2.000ms
TIME
(e) LOAD VELOCITY 1mm/sec
50.0mV
AE WAVE LEVEL
AE WAVE
-50.0mV
-8.000ms
2.000ms
TIME

FIG.27

100
10
3
1
LOAD
VELOCITY
(mm/s)
PREFERABLE
LOAD RANGE
1ST CONVENTIONAL
PRODUCT
2ND CONVENTIONAL
PRODUCT
0
1000
2000
3000
4000
(rpm)

FIG.28

100
10
3
1
LOAD
VELOCITY
(mm/s)
1ST CONVENTIONAL
PRODUCT
2ND CONVENTIONAL
PRODUCT
PREFERABLE
LOAD RANGE
0
1000
2000
3000
4000
(rpm)

FIG.29
8A
9A
9A
B
B
12
10A
16A

8A
9A
12
16A

FIG. 30

8A
9A
12
16A

FIG.31

FIG. 32

10A
8A
12
θp-D

FIG. 33

8A
9A
9A

FIG. 34
8B
9B
9B
F
F
10B
16B

8B
9B
16B

FIG. 35

FIG.36

9B
8B
9B

FIG.37

10B
G
G
8B

FIG.38

10B
8B
$\theta_P$

FIG.39
6B
8B
9B
12
16B
θu

F I G. 40
6B
8B
9B
θp-D
12
16B

10P
12P
TE
LE
8P
DISK ROTATIONAL DIRECTION
40
6

FIG. 41